# EUROPÄISCHE PATENTSCHRIFT

(11) **EP 1 275 858 B1**
(45) Veröffentlichungstag und Bekanntmachung des Hinweises auf die Patenterteilung: **14.04.2004**
(21) Anmeldenummer: 02015178.3
(22) Anmeldetag: 08.07.2002
(51) Int. Cl.: F16B 12/42, A47B 57/40

(54) **Bausatz für Regale**
Construction set for shelves
Eléments de construction pour étagères

(30) Priorität: 10.07.2001 DE 10133486; 13.10.2001 DE 10150648
(43) Veröffentlichungstag der Anmeldung: 15.01.2003
(73) Patentinhaber: Hupfer Metallwerke GmbH & Co., 48653 Coesfeld (DE)
(72) Erfinder: Schumacher, Helmut, 48653 Coesfeld (DE); Pflück, Egbert, 46348 Raesfeld (DE); Dahldrup, Bernhard, 48301 Nottuln (DE)
(74) Vertreter: Habbel, Ludwig (Lutz), Dipl.-Ing.

(56) Entgegenhaltungen:
- CH-A- 400 674
- CH-A- 505 991
- GB-A- 1 104 276
- US-A- 3 747 965

## Beschreibung

Die Erfindung bezieht sich auf einen Bausatz für Regale gemäß dem Oberbegriff des Hauptanspruches und auf ein Verfahren zur Festlegung der Sprossen an Ständerholmen gemäß den Verfahrensansprüchen 9 bis 11.

Bei Regalen erfolgt üblicherweise die feste Verbindung der horizontalen Sprossen mit den Ständerholmen beispielsweise durch Verschweißen. Die Verschweißung bedingt aufgrund ihrer Materialerwärmung außer einer Gefügeveränderung im negativen Sinn auch eine Verfärbung von Ständerholmen und Sprosse, so dass diese beiden Bauteile anschließend oberflächenbehandelt werden müssen. Diese Nachbehandlung verursacht zusätzliche Fertigungskosten.

Wenn Ständerholme und Sprossen verschraubt werden, um eine feste Verbindung dieser Bauelemente zu erreichen, sind Bohrungen erforderlich oder es müssen teure, speziell angefertigte Verschraubungselemente in den Ständerholmen positioniert werden. In jedem Fall ist eine vergleichsweise umständliche Fertigung mit mehreren Fertigungsschritten erforderlich, um eine derartige Verschraubung zu ermöglichen.

Aus dem DE-GM 297 14 749 ist eine Anordnung bekanntgeworden, bei welcher der Ständerholm wenigstens einen Schlitz aufweist, der sich in Längsrichtung des Ständerholmes erstreckt, wobei die Sprosse wenigstens eine Zunge aufweist, die sich in den Schlitz erstreckt, wobei diese Zunge im Inneren des Ständerholmes quer zur Längsachse des Ständerholmes abgewinkelt ist. Auch diese Fertigungsweise ist relativ teuer. Eine ähnliche Einrichtung wird in dem DE-GM 69 48 959 beschrieben, wobei durch einen in den Ständerholm eingesetzten Kern nacheinander die Zinken der Sprossen gebogen und abgekantet sowie fest mit dem Inneren des Ständerholmes verklemmt werden. Schließlich ist aus der DE 32 35 767 eine Anordnung bekanntgeworden, bei welcher ein Klemmstück eingesetzt wird, das hinter hakenartige Enden der Sprosse greift. Diese Anordnung hat den Nachteil, dass auch hier der Herstellungsaufwand relativ groß ist und eine sichere Verklemmung beispielweise bei Materialdehnungen usw. nicht gewährleistet ist.

Aus der gattungsbildenden US 3 747 965 A ist ein Bausatz für Regale bekanntgeworden, bei dem zwei Befestigungskerne eingesetzt werden. In der Sprosse sind im oberen und unteren Randbereich je ein Schlitz vorgesehen, dessen Weite der Wandstärke des Befestigungskernes entspricht. In jedem Befestigungskern ist ebenfalls ein Schlitz vorgesehen, der der Wandstärke der Sprosse entspricht, und nach Einsetzen der Sprosse in den Ständerholm greifen nunmehr die Schlitze in den Befestigungskernen mit ihren Schlitzen in die Schlitze der Sprosse und legen diese dadurch fest. Die Befestigungskerne müssen exakt dem Innendurchmesser der Ständerholme entsprechen, so daß eine außerordentlich genaue Maßfertigung erforderlich ist. Die Zugfestigkeit der Sprossen hängt ausschließlich von der Wandstärke der Sprossen und dem Abstand der Schlitze vom Ende der Sprosse ab und auch hier können sich Temperaturänderungen des Raumes, in dem das Regal aufgestellt wird, nachteilig auf die Stabilität der Verbindung auswirken.

Der Erfindung liegt demgegenüber die Aufgabe zugrunde, eine Verbindung zwischen Ständerholm und Sprosse zu schaffen, die einfach hergestellt werden kann, die eine gute Kraftübertragung von der Sprosse auf den Ständerholm ermöglicht und bei der sichergestellt ist, dass auch bei Materialdehnungen oder - schrumpfungen aufgrund Temperaturspannungen, wie beispielsweise in Gefrierhäusern, keine Lockerung der Sprosse im Ständerholm eintritt.

Diese der Erfindung zugrundeliegende Aufgabe wird durch die Lehre des Hauptanspruches gelöst.

Vorteilhafte Ausgestaltungen der Erfindung sind in den Unteransprüchen erläutert.

In dem selbständigen Anspruch 9 und den auf diesen zurückbezogenen Unteransprüchen wird eine Verfahrensweise be schrieben, mit der eine schnelle und sichere Verbindung der Sprosse mit dem Ständeholm möglich ist.

Mit anderen Worten ausgedrückt wird vorgeschlagen, dass die Sprosse an ihrem Ende im wesentlichen um 90° abgebogen ist. Mit dieser Abbiegung wird die Sprosse in einen entsprechenden Schlitz im Ständerholm eingeführt und dann wird anschließend auf die sich im Ständerholm befindende Sprosse ein Befestigungskern aufgeschoben, der einen Schlitz aufweist, mit dem er die Sprosse beiderseits übergreift und damit die Sprosse im Ständerholm festlegt, wobei vorzugsweise der Befestigungskern die Abkantung der Sprosse definiert an die Innenseite der hinteren Wand des Ständerholmes drückt.

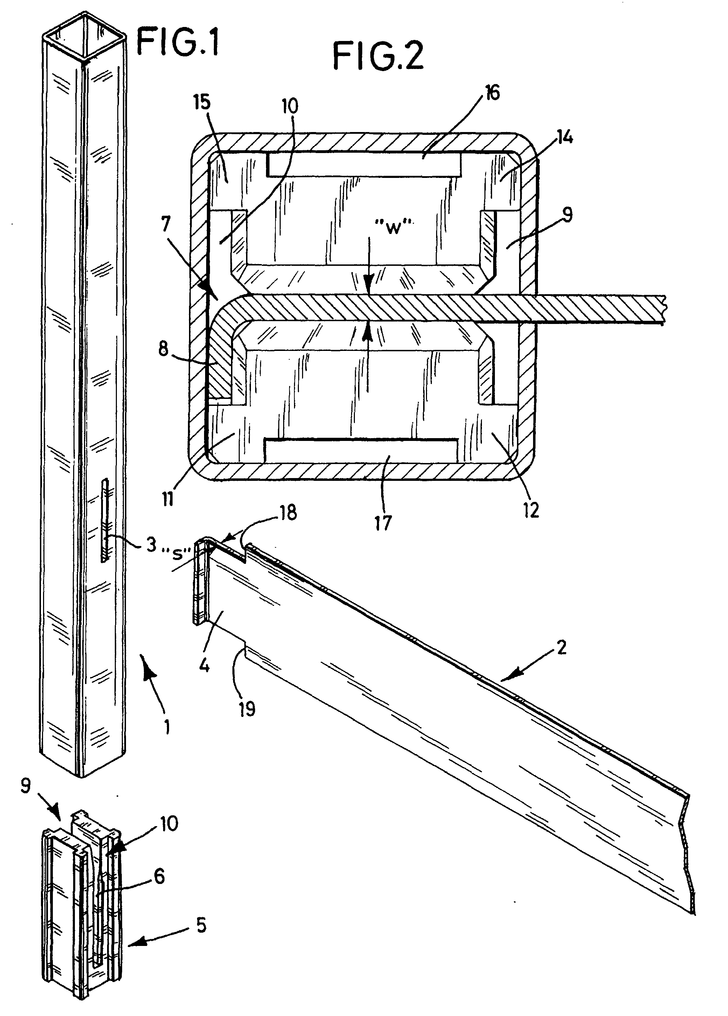

Ein Ausführungsbeispiel der Erfindung wird nachfolgend anhand der Zeichnungen erläutert. Die Zeichnungen zeigen dabei in
- Fig. 1: in einer auseinandergezogenen Darstellungsweise Ständerholm, Sprosse und Befestigungskern und in
- Fig. 2: in größerem Maßstab im Querschnitt die durch einen Befestigungskern innerhalb des Ständerholmes festgelegte Sprosse.

In den Zeichnungen ist mit 1 der Teil eines Ständerholmes bezeichnet, der bei dem dargestellten Ausführungsbeispiel als Vierkantrohr ausgebildet ist und einen Schlitz 3 aufweist, der sich in Längsrichtung des Ständerholmes 1 erstreckt. Eine Sprosse 2 weist bei dem dargestellten Ausführungsbeispiel an ihren beiden Enden (in der Zeichnung ist nur ein Ende dargestellt) eine vorspringende Zunge 4 auf, die an ihrem äußeren freien Ende eine Abkantung 8 oder eine Abbiegung aufweist, die sich rechtwinklig zur Fläche der Sprosse 2 erstreckt. Die Abkantung 8 weist eine abgerundete Außenseite 7 auf. Anstelle der Zunge 4 kann natürlich die Sprosse 2 auch in ihrer ganzen Breite bis zur Abkantung durchgeführt sein und auch die Abkantung 8 weist dann die Breite der Sprosse 2 auf. Die in der Zeichnung dargestellten Endkanten 18 und 19 an der Sprosse 2 fallen dann weg.

Bei 5 ist ein Befestigungskern dargestellt, der einen Schlitz 6 aufweist, der sich über eine bestimmte Länge der Höhe des Befestigungskernes 5 erstreckt und dessen freies Ende sich keilförmig erweitert. Dieser Befestigungskern weist außerdem Druckvorsprünge 11, 12, 14 und 15 auf, deren querschnittliche Außenabmessungen den querschnittlichen Innenabmessungen des Innenraumes des Ständerholmes 1 entsprechen.

Weiterhin sind im Befestigungskern 5 Aufnahmeräume 9 und 10 ausgearbeitet, die der Aufnahme der Abkantung 8 der Sprosse 2 dienen, wobei weiterhin zusätzliche Leerräume 16 und 17 vorgesehen sein können, die sich ebenfalls über die Höhe des Befestigungskernes erstrecken und die die ggf. am Ständerholm 1 vorhandenen Längsschweißnähte aufnehmen können, wobei diese Räume auch Materialverformungen des Befestigungskernes ausgleichen können.

Die Abmessungen des Befestigungskernes 5 sind derart, dass er in das Innere des Ständerholmes 1 eingesetzt werden kann und dabei mit seinem Schlitz 6 die Sprosse 2 an beiden Seiten übergreift. Gleichzeitig pressen sich die Außenseite der Druckvorsprünge 11, 12, 14 und 15 an die Innenwandung des Ständerholmes 1 an und sorgen somit für eine gute Druckverteilung.

Die Höhe des Schlitzes 3 entspricht der Höhe der Sprosse 2.

Materialsparend kann man somit die Höhe der Sprosse 2 belastungsgerecht auslegen, um dann dort, wo Steifigkeit nötig ist, diese über die Höhe des Befestigungskernes 5 positiv zu verändern. Die Weite "s" der Sprosse 2 sollte mit dem Schlitz 6 des Befestigungskernes 5 in Form einer Presspassung korrespondieren, wobei weiterhin die Leerräume 16 und 17 einen Dehnungsraum anbieten, der dann von Vorteil ist, wenn die Toleranzen in der Praxis zu eng werden. Der Schlitz 6 im Befestigungskern 5 ist so ausgeformt, dass sich zusammen mit der Konturierung der Sprosse 2 eine Selbsthemmung ergibt, so dass auf irgendwelche Klebstoffe zur Lagesicherung verzichtet werden kann.

Das Einführen der Sprosse 2 in den Schlitz 3 des Ständerholmes 1 erfolgt derart, dass zuerst die Sprosse 2 so angewinkelt wird, dass die Abkantung 8 in den Schlitz 3 eingreifen kann und dann wird durch Drehen der Sprosse 2 diese ganz in den Ständerholm eingeführt, vorzugsweise so weit, bis die Außenseite der Abkantung 8 sich an der Innenseite der Wandung des Ständerholmes 1 anlegt. Anschließend wird mit einem entsprechenden Werkzeug der Befestigungskern 5 in den Ständerholm 1 eingeschoben und nimmt im Schlitz 6 die Sprosse 2 auf und presst dabei einerseits die Innenwandung des Schlitzes 6 fest an die Sprosse 2 und andererseits die Außenseite der Druckvorsprünge 11, 12, 14 und 15 an die Innenseite des Ständerholmes 1, so dass dadurch eine rutschsichere Festlegung des Befestigungskernes 5 erfolgt.

## Patentansprüche

1. Bausatz für Regale, bestehend aus rohrförmigen Ständerholmen (1) und Sprossen (2) zum Verbinden und Stabilisieren der Ständerholme (1), wobei die Ständerholme (1) sich in Längsrichtung der Holme erstreckende Schlitze (3) zur Aufnahme der Sprossen (2) aufweisen, und ferner bestehend aus Befestigungskernen (5), deren querschnittliche Außenabmessungen den querschnittlichen Innenabmessungen der Ständerholme (1) im wesentlichen entsprechen und die einen sich in ihrer Längsrichtung über einen Teil ihrer Länge erstreckenden Schlitz (6) aufweisen, dessen Weite "w" der Stärke "s" der Sprosse (2) angepasst ist, **dadurch gekennzeichnet, dass** die Sprosse (2) endseitig um 90° abgekantet oder abgebogen ist und der Befestigungskern (5) in Verlängerung des Schlitzes (6) wenigstens einen Aufnahmeraum (9; 10) für die Abkantung (8) aufweist.

2. Bausatz nach Anspruch 1, **dadurch gekennzeichnet, dass** wenigstens die Außenseite der Abkantung (8) bzw. Abbiegung der Sprosse (2) abgerundet ist.

3. Bausatz nach Anspruch 1 oder 2, **dadurch gekennzeichnet, dass** der Schlitz (6) im Befestigungskern (5) zu seinem freien Ende hin keilförmig erweitert ist.

4. Bausatz nach einem der vorhergehenden Ansprüche, **dadurch gekennzeichnet, dass** an beiden Enden des Schlitzes (6) Aufnahmeräume (9, 10) vorgesehen sind.

5. Bausatz nach einem der vorhergehenden Ansprüche, **dadurch gekennzeichnet, dass** beiderseits jedes Aufnahmeraumes (9, 10) Druckvorsprünge (11, 12, 14, 15) geschaffen werden, die sich an die Innenseite des Ständerholmes (1) anlegen.

6. Bausatz nach einem oder mehreren der vorhergehenden Ansprüche, **dadurch gekennzeichnet, dass** die Befestigungskerne (5) aus Kunststoff bestehen.

7. Bausatz nach Anspruch 6, **dadurch gekennzeichnet, dass** in den Seitenwandungen des Befestigungskernes (3) Leerräume (16, 17) vorgesehen sind.

8. Bausatz nach einem der vorhergehenden Ansprüche, **dadurch gekennzeichnet, dass** die Sprosse (2) durch eine Zunge (4) verlängert ist.

9. Verfahren zum Aufbau der Ständerholme eines Regales mit vertikalen Ständerholmen und horizontalen Sprossen, wobei die Sprossen in entsprechende Schlitze der Ständerholme eingesetzt werden, in das Innere der Ständerholme jeweils ein Befestigungskern eingeführt wird, der mit einem in seiner Längsachse ausgerichteten Schlitz die Sprosse beidseitig umgreift und die Sprosse innerhalb des Ständerholmes festlegt. **dadurch gekennzeichnet, dass** vor Einsetzen der Sprossen in den Ständerholm die Sprosse um 90° abgewinkelt wird und sich nach Einsetzen in den Ständerholm und Einschieben des Befestigungskernes in einen Aufnahmeraum des Befestigungskernes einlegt und dadurch die Sprosse zugfest und druckfest arretiert.

10. Verfahren nach Anspruch 9, **dadurch gekennzeichnet, dass** die Sprosse so weit in den Befestigungskern eingeführt wird, dass die Außenseite der Abkantung sich an die Innenseite des Ständerholmes anlegt.

11. Verfahren nach einem der vorhergehenden Ansprüche 9 oder 10, **dadurch gekennzeichnet, dass** der Befestigungskern sich beim Aufschieben auf die Sprosse mit Druckvorsprüngen an die Innenwand des Ständerholmes anpresst.

## Claims

1. Construction set for shelves consisting of tubular housing posts (1) and rungs (2) for connecting and stabilising the housing posts (1), in which the housing posts (1) have slots (3) extending in the longitudinal direction of the posts to receive the rungs (2), and also consisting of fastening cores (5), the external cross sections of which correspond more or less to the internal cross sections of the housing posts (1) and which have a slot (6) extending over part of their length in their longitudinal direction, the width "w" of which is adapted to the thickness "s" of the rung (2), **characterised by** the fact that the rung (2) is bent or chamfered at the end by 90° and the fastening core (5) has at least one receiving area (9; 10) for the chamfer (8) in the extension of the slot (6).

2. Construction set according to claim 1, **characterised by** the fact that at least the exterior of the chamfer (8) or bend of the rung (2) is rounded.

3. Construction set according to claim 1 or 2, **characterised by** the fact that the slot (6) in the fastening core (5) is extended in the form of a wedge at the free end.

4. Construction set according to one of the previous claims, **characterised by** the fact that there are receiving areas (9, 10) at both ends of the slot (6).

5. Construction set according to one of the previous claims, **characterised by** the fact that on both sides of each receiving area (9, 10) compression projections (11, 12, 14, 15) are provided which are on the interior of the housing post (1).

6. Construction set according to one or several of the previous claims, **characterised by** the fact that the fastening cores (5) are made of plastic.

7. Construction set according to claim 6, **characterised by** the fact that the side walls of the fastening core (3) are provided with vacuities (16, 17).

8. Construction set according to one of the previous claims, **characterised by** the fact that the rung (4) is extended by a tongue (4).

9. Method for construction of the housing posts of a shelf with vertical housing posts and horizontal rungs, in which the rungs are inserted into the relevant slots in the housing posts, a fastening core is inserted into the inside of the housing posts, which encompasses the rung on both sides with a slot in its longitudinal axis and locates the rung inside the housing post, **characterised by** the fact that before inserting the rungs into the housing post the rung is bent by 90° and after inserting into the housing post and pushing into the fastening core, it is in a receiving area of the fastening core and thus the rung is locked in place in a manner guaranteeing tensile strength and pressure-resistance.

10. Method according to claim 9, **characterised by** the fact that the rung is inserted into the fastening core to such an extent that the exterior of the chamfer is on the interior of the housing post.

11. Method according to one of the previous claims 9 or 10 **characterised by** the fact that when pushing the rung the fastening core presses onto the internal wall of the housing post with compression projections.

## Revendications

1. Kit prêt-à-monter pour étagères, composé de montants (1) en forme de tube et de croisillons (2) pour la fixation et la stabilisation des montants (1), les montants (1) comportant des fentes (3) s'étendant dans le sens longitudinal du montant et destinés à recevoir les croisillons (2), et composé également de noyaux de fixation (5), dont les dimensions externes de la coupe transversale correspondent essentiellement aux dimensions internes de la coupe transversale des montants (1), et qui comportent une encoche (6) s'étendant longitudinalement sur une partie de leur longueur, dont la profondeur « w » est adaptée à l'épaisseur « s » du croisillon (2), **caractérisé en ce que** le croisillon (2) est plié ou courbé à son extrémité à 90° et **en ce que** le noyau de fixation (5) comporte dans la prolongation de l'encoche (6) au moins un logement (9 ; 10) pour la pliure (8).

2. Kit prêt-à-monter selon la revendication 1, **caractérisé en ce qu'**au moins le côté externe de la pliure (8) ou de la courbure du croisillon (2) est arrondi.

3. Kit prêt-à-monter selon la revendication 1 ou 2, **caractérisé en ce que** l'encoche (6) dans le noyau de fixation (5) présente, vers son extrémité ouverte, un élargissement en V.

4. Kit prêt-à-monter selon l'une quelconque des revendications précédentes, **caractérisé en ce que**, au niveau des deux extrémités de l'encoche (6), des logements (9 ; 10) sont prévus.

5. Kit prêt-à-monter selon l'une quelconque des revendications précédentes, **caractérisé en ce qu'**il existe, des deux côtés de chaque logement (9 ; 10), des saillies de pression (11, 12, 14, 15) qui viennent s'appliquer contre la face interne du montant (1).

6. Kit prêt-à-monter selon une ou plusieurs des revendications précédentes, **caractérisé en ce que** les noyaux de fixation (5) sont en matière plastique.

7. Kit prêt-à-monter selon la revendication 6, **caractérisé en ce que**, dans les parois latérales du noyau de fixation (3), sont prévus des espaces vides (16, 17).

8. Kit prêt-à-monter selon l'une quelconque des revendications précédentes, **caractérisé en ce que** le croisillon (2) est prolongé par une langue (4).

9. Procédé de montage des montants d'une étagère avec des montants verticaux et des croisillons horizontaux, les croisillons étant insérés dans les fentes correspondantes des montants, un noyau de fixation étant respectivement introduit à l'intérieur des montants, le noyau de fixation enserrant des deux côtés le croisillon à l'aide d'une encoches orientée sur son axe longitudinal et fixant ainsi le croisillon à l'intérieur du montant, **caractérisé en ce que**, avant introduction des croisillons dans le montant, le croisillon est plié à 90° et **en ce qu'**il est placé, après introduction dans le montant et insertion du noyau de fixation, dans un logement prévu dans le noyau de fixation de manière à résister aux mouvements de traction ou de poussée.

10. Procédé selon la revendication 9, **caractérisé en ce que** le croisillon est inséré si loin dans le noyau de fixation que le côté externe de la pliure vient s'appliquer contre la face interne du montant.

11. Procédé selon l'une quelconque des revendications précédentes 9 ou 10, **caractérisé en ce que** le noyau de fixation vient s'appuyer, via les saillies de pression, contre la face interne du montant lorsqu'il vient enserrer le croisillon.
